# EUROPEAN PATENT SPECIFICATION

(11) **EP 1 393 977 B1**
(45) Date of publication and mention of the grant of the patent: **02.11.2005**
(21) Application number: 03077535.7
(22) Date of filing: 13.08.2003
(51) Int. Cl.: B60R 3/02

(54) **Extending step**
Ausfahrbare Trittstufe
Marchepied extensible

(30) Priority: 29.08.2002 BE 200200507
(43) Date of publication of application: 03.03.2004
(73) Proprietor: Omnistor Accessories, naamloze vennootschap, 8930 Menen (BE)
(72) Inventor: Verhelst, Jan Robert Marcel, 8930 Menen (BE)
(74) Representative: Donné, Eddy

(56) References cited:
- WO-A-01/10680
- DE-A- 4 341 134
- FR-A- 2 651 739
- SU-A- 591 342

## Description

The present invention concerns an extending step, in particular an extending step that can be fitted underneath the door opening of a caravan, camper, trailer or the like, and that can be extended by means of a drive in order to facilitate the access to the caravan or the like and that can be pushed in so that the step does not extend dangerously out of the bodywork while driving.

Already known are such extending steps, mainly consisting of a proper step that is in a sliding way set in the guides of a frame with which the extending step can be fitted underneath the caravan or the like and of drive means which are installed in between the frame and the proper step.

Such already known extending steps have the disadvantage that the mechanism of the driving means only engages in one single point of the proper step and that the driving powers contain a lateral component in this point, causing the proper step to rotate around the point of action of the driving mechanism and thus moves obliquely in the guides.

As a result, pushing in and extending of the proper step causes frictions between the steps and the guides, causing wear both of the step and the guides with the risk that the step will be blocked in the guides, thus damaging the extending step and making it unusable.

The above-mentioned problems were solved with a step as is known from for instance SU 591342, disclosing all features of the preamble of claim 1.

The present invention aims to further improve the known extending steps.

To this end the invention concerns an extending step according to claim 1.

In order to better explain the characteristics of the invention, the following preferred embodiment is described as an example only without being limitative in any way, of an extending step according to the invention with reference to the accompanying drawings in which:
Figure 1 schematically represents a perspective view of a caravan that is provided with an extending step according to the invention;
figure 2 represents on a larger scale a perspective view of the bottom of the extending step according to arrow F2 in figure 1;
figure 3 represents a view according to arrow F3 in figure 2;
figure 4 is a view similar to the one of figure 2, however for another position;
figure 5 represents a view according to arrow F5 in figure 4.

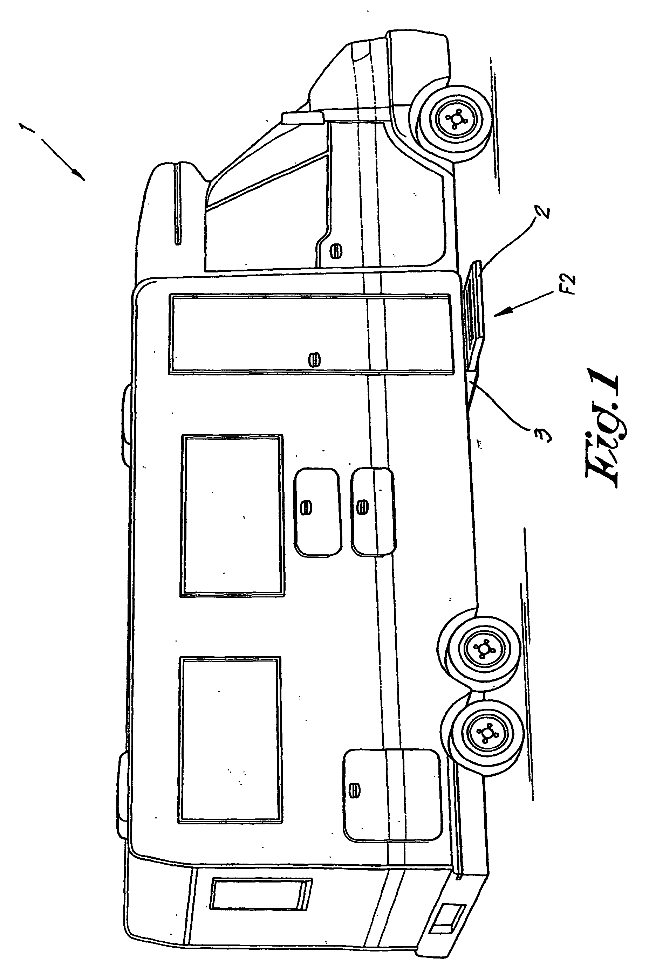

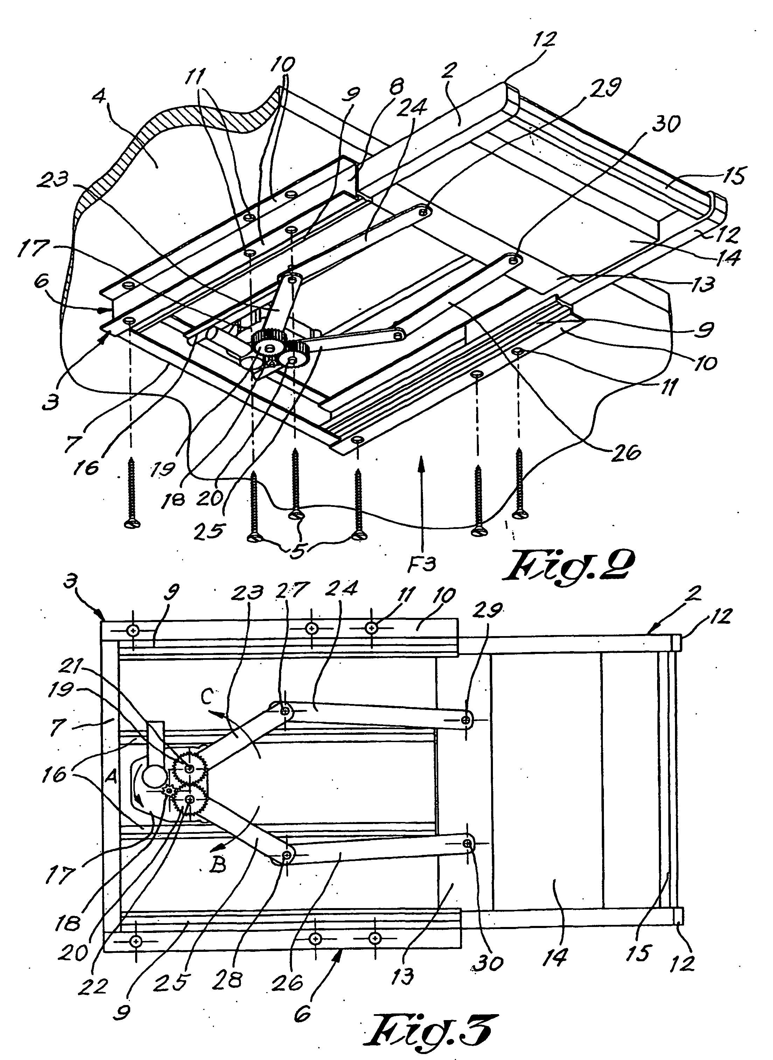

As an example, a camper 1 is represented in figure 1, provided with an extending step according to the invention, whereby the extending step, as represented more in detail in the figures 2 to 5, mainly consists of a proper step 2 set in a frame 3 that is fitted underneath the caravan 1 against the bodywork 4 or the like, for example by means of screws 5.

In the represented example, the above-mentioned frame 3 is formed as a rectangular frame that mainly consists of two parallel guides 6 which are fitted to one another at their extreme ends by means of a cross connection 7.

The guides 6 contain a U-shaped part with a body 8 and flanges 9 and are on the averted sides of the body 8 provided with flanges 10 with holes 11 through which the above-mentioned screws 5 are to be fitted.

The proper step 2 is formed by two parallel profiles 12 which are interconnected by cross elements 13-14-15, whereby the proper step 2 is fitted in a sliding way in the guides 6 by means of the above-mentioned profiles 12.

On the frame 3 a drive is fitted by means of two profiles which in this case is of formed by an engine 17 which is provided with a gear wheel 18 on its output axe.

In between the proper step 2 and the frame 3 means are provided in order to move the proper step 2 according to the invention parallel to itself.

These means are on the one hand formed by two engaging gear wheels 19 and 20, which are each fitted in a hinging way onto an axe 21, respectively 22, whereby these axes 21-22 are fitted at equal distances of the proper step 2, for example because they are fitted, as represented, onto the housing of the engine 17, and on the other hand by two sets of rods, respectively 23-24 and 25-26, whereby the rods of each set are coupled together in a freely hinging way at one extreme end by means of a pivot 27, respectively 28, and whereby each time one rod 23, respectively 25, of each set is fitted with its free extreme end to the above-mentioned gear wheel 19, respectively 20, while the other rod 24, respectively 26, at its free extreme end is fitted in a freely hinging way on the side of the proper step 2 that is facing the frame 3 by means of a pivot 29, respectively 30.

The two sets of rods 23-24 and 25-26 and the gear wheels 19 and 20 are carried out symmetrically as each others mirror image, whereby in particular the gear wheels 19 and 20 contain an equal amount of teeth, while the rods 23 and 25, on the one hand and the rods 24 and 26 on the other hand, are equally long.

The above-mentioned means consisting of the two sets of rods 23-24 and 25-26 and the gear wheels 19 and 20 are fitted centrally in relation to the width of the frame 3.

In this case, the above-mentioned drive combines with the above-mentioned means to move the proper step 2 parallel to itself because the gear wheel 18 engages the gear wheel 20.

The functioning of the extending step according to the invention is very simple and goes as follows:

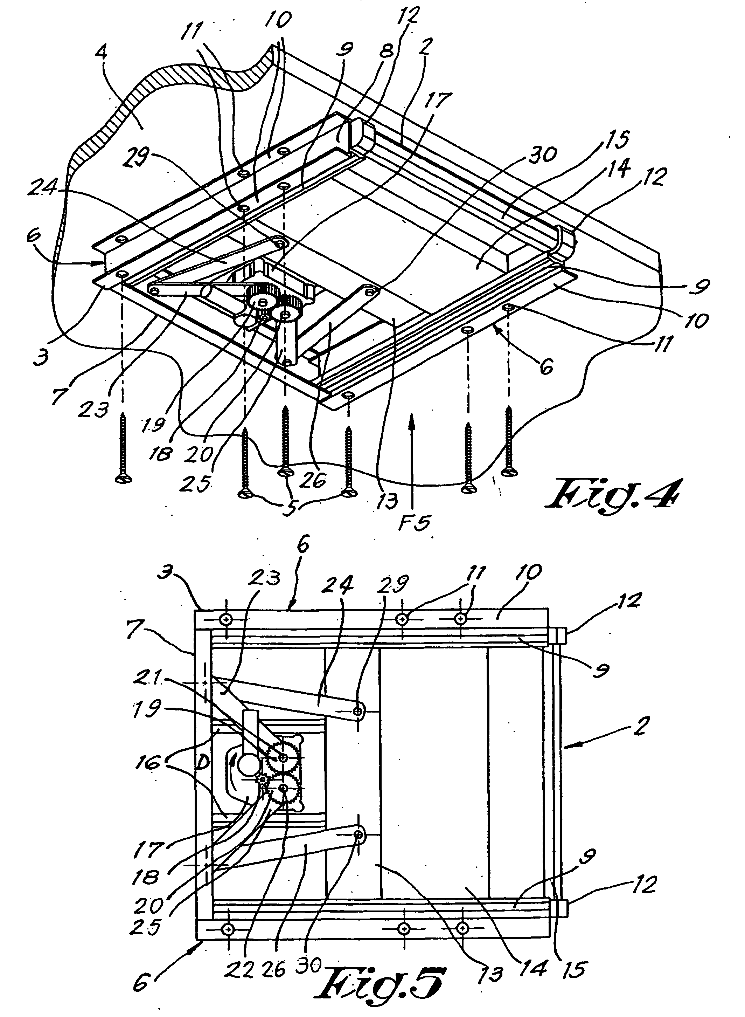

In order to push the proper step 2, from the extending position, as represented in the figures 2 and 3, into the frame 3, the engine 17 is energised which turns the gear wheel 18 as represented by arrow A in figure 3 counterclockwise as a result of which as represented by arrow B in figure 3 the gear wheel 20 and the rod 25 connected thereto are turned clockwise, while the gear wheel 19 and the rod 23 in their turn are driven counterclockwise due to the engaging gear wheels 19 and 20 as represented by the arrow C in figure 3.

It is clear that due to the symmetrical movement of the rods 23 and 25 and due to the connection of the rods 24 and 26, the proper step 2 will always be moved parallel to itself and hence without side force in the guides 6, thus preventing any abnormal friction.

The engine 17 will be energised until the proper step 2, as represented in the figures 4 and 5, is completely pushed into the frame 3.

It is clear that again extending of the proper step 2, starting from the pushed-in position, as represented in the figures 4 and 5, is carried out in an analogue way by driving the engine 17 clockwise as represented by the arrow D in figure 5.

The above-mentioned drive in the form of an engine 17 and gear wheel 18 may possibly be realised in other ways, without there necessarily being need for a direct connection between the drive concerned and the means described above in order to always move the proper step 2 parallel to itself.

The present invention is in no way limited to the embodiment described as an example and as represented in the figures, but an extending step according to the invention can be carried out in various forms and sizes without departing from the scope of the invention, as defined in the claims.

## Claims

1. Extending step mainly consisting of a proper step (2) which is in a sliding way set in guides (6) of a frame (3) with which the extending step can be fitted underneath a caravan (1) or the like, whereby in between the proper step (2) and the frame (3) means are provided to move the proper step (2) parallel to itself, the means to move the proper step (2) parallel to itself, are formed by two sets of rods, (23-24 and 25-26), whereby the rods of each set are coupled together in a freely hinging way at one extreme and whereby one rod (24, 26) of each set, at its free extreme end is fitted in a freely hinging way to the side of the proper step (2) that is facing the frame (3), **characterised in that** said the moving means is also formed by two engaging gear wheels (19-20), and the other rod (23, 25), of each set is fitted with its free extreme end to the above-mentioned gear wheel (19, 20).

2. Extending step according to claim 1, **characterised in that** the above-mentioned gear wheels (19-20) are fitted at equal distances from the proper step (2).

3. Extending step according to claim 1, **characterised in that** the above-mentioned means to move the proper step parallel to itself are carried out symmetrically, whereby in particular the two sets of rods (23-24 and 25-26) and the gear wheels 19 and 20 are carried out as each others mirror images.

4. Extending step according to claim 1, **characterised in that** the means to move the proper step (2) parallel to itself are fitted centrally in relation to the width of the frame 3.

5. Extending step according to claim 1, **characterised in that** the driving means contain an engine (17) which is provided on its axe with a gear wheel (18) which combines with one of the above-mentioned gear wheels (19-20).

6. Extending step according to claim 1, **characterised in that** both gear wheels (19-20) contain an equal number of teeth.

7. Extending step according to claim 1, **characterised in that** on the one hand the rods (23-25) which are fitted to the above-mentioned gear wheels (19-20) are among themselves equally long, and on the other hand, the rods (24-26) coupled thereto are among themselves equally long.

## Patentansprüche

1. Ausziehbare Stufe, hauptsächlich bestehend aus einer eigentlichen Stufe (2), die gleitend in Führungen (6) eines Rahmens (3), mit dem die ausziehbare Stufe unter einem Wohnwagen (1) oder dergleichen angebracht werden kann, wobei zwischen der eigentlichen Stufe (2) und dem Rahmen (3) Mittel bereitgestellt sind, um die eigentliche Stufe (2) parallel zu sich selbst zu bewegen, **dadurch gekennzeichnet, dass** die Mittel um die eigentliche Stufe (2) parallel zu sich selbst zu bewegen sind durch zwei Sätze von Stäben (23-24 und 25-26) gebildet, wobei die Stäbe jedes Satzes frei schwenkbar an einem Ende aneinander gekoppelt sind und wobei ein Stab (24, 26) jedes Satzes an seinem freien Ende frei schwenkbar an der Seite der eigentlichen Stufe (2), die zum Rahmen (3) gerichtet ist, angebracht ist, die bewegenden Mittel auch durch zwei eingreifende Zahnräder (19-20) gebildet sind und der andere Stab (23, 25) jedes Satzes mit seinem freien Ende an dem oben genannten Zahnrad (19, 20) angebracht ist.

2. Ausziehbare Stufe nach Anspruch 1, **dadurch gekennzeichnet, dass** die oben genannten Zahnräder (19-20) in gleichen Abständen von der eigentlichen Stufe (2) angebracht sind.

3. Ausziehbare Stufe nach Anspruch 1, **dadurch gekennzeichnet**, das die oben genannten Mittel um die eigentliche Stufe parallel zu sich selbst zu bewegen symmetrisch ausgeführt sind, wobei insbesondere die zwei Sätze von Stäben (23-24 und 25-26) und die Zahnräder 19 und 20 als Spiegelbilder von einander ausgeführt sind.

4. Ausziehbare Stufe nach Anspruch 1, **dadurch gekennzeichnet, dass** die Mittel um die eigentliche Stufe (2) parallel zu sich selbst zu bewegen mittig in Bezug auf die Breite des Rahmens (3) angebracht sind.

5. Ausziehbare Stufe nach Anspruch 1, **dadurch gekennzeichnet, dass** die Antriebsmittel einen Motor (17) aufweisen, der auf seiner Achse mit einem Zahnrad (18) versehen ist, das mit einem der oben genannten Zahnräder (19-20) zusammenarbeitet.

6. Ausziehbare Stufe nach Anspruch 1, **dadurch gekennzeichnet, dass** beide Zahnräder (19-20) eine gleiche Anzahl von Zähnen enthalten.

7. Ausziehbare Stufe nach Anspruch 1, **dadurch gekennzeichnet, dass** einerseits die Stäbe (23-25), die an den oben genannten Zahnrädern (19-20) angebracht sind, untereinander gleich lang sind und andererseits die an diese gekoppelten Stäbe (24-26) untereinander gleich lang sind.

## Revendications

1. Marche extensible constituée principalement d'une marche proprement dite (2) qui est montée en coulissement dans des guides (6) d'un encadrement (3) avec lequel la marche extensible peut venir se disposer en dessous d'une caravane (1) ou analogues, des moyens étant prévus entre la marche proprement dite (2) et l'encadrement (3) pour déplacer la marche proprement dite (2) parallèlement à elle-même, les moyens pour déplacer la marche proprement dite (2) parallèlement à elle-même étant formés par deux jeux de tiges (23-24 et 25-26), les tiges de chaque jeu étant couplées l'une à l'autre en oscillation libre à une extrémité et une tige (24, 26) de chaque jeu, à son extrémité libre, étant disposée en oscillation libre sur le côté de la marche proprement dite (2) opposé à l'encadrement (3), **caractérisée en ce que** les moyens de déplacement sont également formés par deux roues dentées d'engrènement (19-20) et l'autre tige (23, 25) de chaque jeu est montée avec son extrémité libre sur la roue dentée (19, 20) susmentionnée.

2. Marche extensible selon la revendication 1, **caractérisée en ce que** les roues dentées susmentionnées (19-20) sont disposées dans des positions équidistantes par rapport à la marche proprement dite (2).

3. Marche extensible selon la revendication 1, **caractérisée en ce que** les moyens susmentionnés pour déplacer la marche proprement dite parallèlement à elle-même sont actionnés de manière symétrique, en particulier les deux jeux de tiges (23-24 et 25-26) et les roues dentées (19 et 20) sont actionnées sous la forme d'images réciproquement inverses.

4. Marche extensible selon la revendication 1, **caractérisée en ce que** les moyens destinés à déplacer la marche proprement dite (2) parallèlement à elle-même sont disposés en position centrale par rapport à la largeur de l'encadrement (3).

5. Marche extensible selon la revendication 1, **caractérisée en ce que** les moyens d'entraînement contiennent un moteur (17) qui est muni sur son axe d'une roue dentée (18) qui se combine avec une des roues dentées (19-20) susmentionnées.

6. Marche extensible selon la revendication 1, **caractérisée en ce que** les deux roues dentées (19-20) contiennent un nombre égal de dents.

7. Marche extensible selon la revendication 1, **caractérisée en ce que**, d'une part les tiges (23-25), qui sont montées sur les roues dentées susmentionnés (19-20), sont d'égale longueur l'une par rapport à l'autre, et d'autre part les tiges (24-26) qui sont couplées sont d'égale longueur l'une par rapport à l'autre.
